# EUROPÄISCHE PATENTSCHRIFT

(11) **EP 1 599 980 B1**
(45) Veröffentlichungstag und Bekanntmachung des Hinweises auf die Patenterteilung: **11.07.2007**
(21) Anmeldenummer: 04714751.7
(22) Anmeldetag: 26.02.2004
(51) Int. Cl.: H04L 12/64

(54) **SYNCHRONE MULTI-CLUSTER NETZWERKARCHITEKTUR**
SYNCHRONOUS MULTI-CLUSTER NETWORK ARCHITECTURE
ARCHITECTURE DE RESEAUX MULTI-GRAPPES SYNCHRONE

(30) Priorität: 27.02.2003 DE 10308818
(43) Veröffentlichungstag der Anmeldung: 30.11.2005
(73) Patentinhaber: SMSC Europe GmbH, 76185 Karlsruhe (DE)
(72) Erfinder: HETZEL, Herbert, 76885 Schweigen-Rechtenbach (DE); HECK, Patrick, 76448 Durmersheim (DE); THIEL, Christian, 83098 Brannenburg (DE)
(74) Vertreter: Lohr, Georg
(86) Internationale Anmeldenummer: PCT/EP2004/001925
(87) Internationale Veröffentlichungsnummer: WO 2004/077771

(56) Entgegenhaltungen:
- EP-A- 1 052 793
- DE-A- 4 109 150
- US-A- 5 835 031

## Beschreibung

### Technisches Gebiet

Die Erfindung betrifft ein Netzwerk welches eine synchrone Datenübertragung bei wahlfreier Adressierung innerhalb verschiedener Teilnetzwerke ermöglicht sowie ein Verfahren zur Herstellung eines solchen Netzwerks zur Datenübertragung.

### Stand der Technik

Es gibt eine Vielzahl unterschiedlicher Netzwerktypen für die unterschiedlichsten Anwendungsfälle. Entsprechend variieren auch die Anforderungen an Zuverlässigkeit, Übertragungssicherheit und Echtzeitfähigkeit. So werden beispielsweise zur Übertragung von Paketdaten, wie E-Mails oder Dateien relativ geringe Anforderungen bzgl. Bandbreite und Übertragungssicherheit an das Netzwerk gestellt. Im Gegensatz hierzu werden zur Übertragung steuerungs- und sicherheitsrelevanter Daten beispielsweise in Kraftfahrzeugen, hohe Anforderungen an Echtzeitfähigkeit und Zuverlässigkeit gestellt, während auch hier eine relativ niedrige Bandbreite toleriert werden kann. Solche Daten, bei denen eine deterministische d.h. vorhersagbare Übertragungscharakteristik gefordert ist, werden als Kontrolldaten bezeichnet. Bei Multimedia-Anwendungen wird zur Übertragung von Synchrondaten Echtzeitfähigkeit sowie mittlere bis hohe Bandbreite benötigt. Um diesen Anforderungen bei gleichzeitig möglichst geringen Kosten gerecht zu werden, werden jeweils für die Aufgaben optimierte Netzwerke eingesetzt.

So gibt es beispielsweise in Kraftfahrzeugen meist wenigstens ein Kontrolldaten-Netzwerk, das die Fahrwerks- und Motorfunktionen steuert und dabei Sensoren und Aktoren mit den Steuereinheiten verknüpft. Daneben gibt es häufig ein weiteres Kontrolldaten-Netzwerk für die Karosseriefunktionen wie Beleuchtung, Klimaanlage, Fensterheber und andere derartige Funktionen. Ein weiteres Netzwerk zur Synchron- und gleichzeitigen Kontroll- Datenübertragung findet sich im Infotainmentbereich zur Multimedia-Übertragung. Es verknüpft Funktionen wie Telefon, Navigationseinheit und Audiosystem sowie ein oder mehrere Videosysteme miteinander. Auch für den Sicherheitsbereich gibt es zur Steuerung von Airbags und Unfallsensoren spezielle Netzwerke. In vielen Fällen sind die Netzwerke unabhängig voneinander entwickelt worden entsprechend den Bedürfnissen der über sie zu steuernden Funktionen und haben unterschiedliche Übertragungsbandbreiten. Auf ihnen werden jeweils unterschiedliche Mechanismen für das Netzwerk-Management, die Datensicherung oder das Handshaking und die Segmentierung von Datenpaketen gefahren. Die Verbinder zwischen diesen unterschiedlichen Netzwerk-Welten und Netzwerk-Philosophien bilden sog. Gateways, die Daten und Philosophien ineinander umsetzen müssen.

Je stärker die logische Verknüpfung zwischen Funktionen auch über mehrere dieser Netzwerke hinweg wird und je unterschiedlicher die Netzwerke sind, desto komplexer werden diese Umsetzer, die Gateways. Aber auch die Unterschiedlichkeit der Philosophien der Netzwerke an sich führt zu Problemen. So ist beispielsweise das Aufstarten eines Systems aus mehreren Netzwerken, die alle unterschiedliche Aufstartmechanismen implementiert haben ein höchst komplexer Vorgang und nur schwer sicher zu beherrschen. Auch die Echtzeitfähigkeit solcher Systeme ist in keiner Weise gegeben. Ist die Gewährleistung von zeitlichem Determinismus auf einzelnen Netzwerken wie CAN bereits ein äußerst komplexer Vorgang, so wird dies über mehrere Netzwerke und Gateways hinweg nahezu unmöglich. Die Verzögerung einer Botschaft zwischen zwei Teilnehmern auf unterschiedlichen Netzwerken hängt nicht nur von den Verzögerungen auf den einzelnen Netzen ab, sondern von der momentanen Auslastung der oder des Gateways, das dazwischen liegt und von der Gesamtsituation der momentan umzusetzenden Botschaften. Steuerungen und Regelungen lassen sich so kaum realisieren. Auch eine bekannte Prioritätensteuerung reduziert zwar die Gesamtverzögerung, schafft aber keinen Determinismus.

Ein weiteres, dem Stand der Technik entsprechendes Netzwerk ist MOST (Media Oriented Systems Transport). MOST ist definiert durch die MOST Specification Rev. 2.2; MOST Cooperation 11/2002und MOST Specification Framework Rev. 1.1; MOST Cooperation 1999, welche als Bestandteil dieser Patentanmeldung betrachtet werden sollen.
Dieses MOST-Netzwerk ermöglicht für sich alleine eine deterministische Übertragung von Kontrolldaten und Synchrondaten neben normalen Paketdaten. Im Verbund mit anderen Netzwerken ist eine deterministische Übertragung aber kaum mehr möglich, da sich durch die Gateways undefinierte Verzögerungszeiten ergeben.

In der EP 1 052 793 A ist ein Verfahren zur Übertragung von Daten in einer homogenen Netzwerkstruktur mit einheitlichen Datenstrukturen, wobei die zwischen den Teilnehmern entstehenden minimalen Frequenzdifferenzen in der Größenordnung von 100 ppm kompensiert werden.

Ein Verfahren zur Übertragung von Daten über unterschiedlichste Netzwerke ist in der US 6,522,651 offenbart. Darin wird durch einen geeigneten Algorithmus eine Anpassung bestimmter Daten an eine vom Netzwerk festgelegte Paketgröße vorgenommen. Allerdings ist mit diesem Verfahren auch keine deterministische Übertragung möglich.

Eine rein deterministische Übertragung ist mit ISDN, Peter Bocker: "ISDN - Das dienstintegrierende digitale Nachrichtennetz, Konzepte, Verfahren, Systeme", Springer Verlag, Berlin, 1987 bzw. Peter Bocker: "ISDN - The Integrated Services Digital Network. Concepts, Methods, Systems", Springer Verlag, Berlin, 1987 möglich. Das globale ISDN-Netzwerk besteht aus einer Vielzahl miteinander verbundener Teilnetzwerke. In diesen werden Daten mit einer vorgegebenen Taktfrequenz zeitsynchron übertragen. Mehrere Netzwerke einer niedrigeren Hierarchieebene mit niedrigeren Datenraten werden zu Netzwerken höherer Hierarchieebenen mit höheren Datenraten zusammengefasst. Dabei werden für die Daten der Netzwerke aus niedrigeren Hierarchieebenen feste Positionen in den Datenrahmen der höheren Hierarchieebenen zugewiesen. ISDN-Netzwerke sind ausschließlich als Punktzu Punkt- Verbindungen implementiert. So wird zu Beginn einer Kommunikation mittels Signalisierung eine Punktzu Punkt- Verbindung zwischen zwei gewünschten Teilnehmern aus einer großen Anzahl möglicher Teilnehmer hergestellt. Diese Verbindung bleibt nun für eine bestimmte Zeit zur Kommunikation bestehen. Während dieser Zeit werden die zu übertragenden Daten zeitsynchron auf dem beim Verbindungsaufbau definierten physikalischen und logischen Weg übertragen. Während einer Verbindung bleibt normalerweise der logische und physikalische Weg der Verbindung und somit auch die Zuordnung der Positionen der Daten in den Datenrahmen bestehen. Da ISDN ursprünglich für die Fernmeldetechnik, insbesondere zur Übertragung von Sprache und Paketdaten zwischen zwei Teilnehmern konzipiert war, ist dieses ausschließlich für Punkt- zu Punkt- Verbindungen optimiert. Eine Verbindung zwischen einer Vielzahl unterschiedlicher Teilnehmer (Multicast), wie dies in modernen Datenbussystemen notwendig ist, ist mit ISDN nicht möglich. Grundsätzlich ermöglicht ISDN eine eingeschränkte Echtzeit-Übertragung mit einer Laufzeit in einer Größenordnung von einigen 100 ms. Dies trifft allerdings nur dann zu, wenn eine Verbindung bereits aufgebaut ist. Muss eine Verbindung erst neu aufgebaut werden, so sind Verzögerungszeiten in Sekunden-Bereich wahrscheinlich. Um nun mittels ISDN ein echtzeitfähiges Netzwerk mit deterministischen Verzögerungszeiten zu gestalten, in welchem eine wahlfreie Kommunikation zwischen beliebigen Teilnehmern möglich ist, müsste für sämtliche Kombinationen der Teilnehmer, welche miteinander kommunizieren möchten zu Beginn einer Kommunikation eine Verbindung aufgebaut werden, welche die später zur Datenübertragung maximal notwendige Bandbreite bereithält. So wären in einem Bussystem, welches mit einer maximalen Übertragungsrate von 10 MBit pro Sekunde beispielsweise 10 Teilnehmer miteinander verbindet, 45 Punkt- zu Punkt- Verbindungen mit einer Übertragungsrate von 10 MBit pro Sekunde vorzuhalten, auch wenn diese maximale Datenrate beispielsweise nur einmal pro Sekunde benutzt wird.

### Darstellung der Erfindung

Der Erfindung liegt die Aufgabe zugrunde, eine Netzwerkarchitektur zu schaffen, in welcher mehrere Teilnetzwerke miteinander verbunden sind, wobei eine wahlfreie Adressierung einzelner Teilnehmer für vorbestimmte oder beliebige Datenrahmen oder Teile von Datenrahmen möglich ist und neben der Übertragung von Paketdaten zwischen den Teilnehmern eine deterministische Übertragung von Kontrolldaten bzw. Synchrondaten möglich ist. Weiter wird vorteilhafterweise der Aufwand in den Gateways reduziert und die deterministische Übertragung auch über mehrere Netzwerk-Cluster und Gateways hinweg gewährleistet.

Eine erfindungsgemäße Lösung dieser Aufgabe ist in den unabhängigen Patentansprüchen angegeben. Weiterbildungen der Erfindung sind Gegenstand der abhängigen Ansprüche.

Ein Netzwerk zur Datenübertragung umfasst weiterhin mehrere Teilnetzwerke (hier auch Cluster genannt), in denen die Daten in Form von Datenrahmen (nachfolgend auch Frame genannt) übertragen werden. Ein Teilnetzwerk umfasst wenigstens zwei, vorzugsweise aber eine größere Anzahl an Teilnehmern. Die Datenrahmen auf den einzelnen Teilnetzwerken können unterschiedlich gestaltet sein. So kann insbesondere die Größe der Datenrahmen variieren. Ein Datenrahmen kann somit nur wenige Bits oder auch lange Sequenzen aus vielen KiloBits umfassen.

Mit Hilfe der Datenrahmen sind wahlweise Paketdaten, Kontrolldaten oder auch Synchrondaten zu übertragen, wobei einzelne Datenarten auch innerhalb eines einzigen Datenrahmens kombiniert sein können. Erfindungsgemäß ist ein erstes Teilnetzwerk zur gleichzeitigen Adressierung von Daten an mehrere Teilnehmer (Broadcast oder Multicast) und/oder zur wahlfreien Adressierung einzelner Datenpakete bzw. Datenrahmen oder Teile von Datenrahmen an unterschiedliche Teilnehmer ausgelegt. Weiterhin ist dieses erste Teilnetzwerk zur wechselweisen Übertragung von mehreren Datenarten, wie Paketdaten, Kontrolldaten oder auch Synchrondaten ausgelegt. Dabei können unterschiedliche Datenarten je nach Konfiguration des Netzwerkes in einem einzigen und/oder in aufeinanderfolgenden Datenrahmen transportiert werden.

Ein erfindungsgemäßes Netzwerk umfasst wenigstens ein weiteres Teilnetzwerk, welches für von dem ersten Teilnetzwerk gleiche oder unterschiedliche Übertragungsraten konfiguriert ist. Der Begriff der Übertragungsrate bezieht sich hier auf die Geschwindigkeit, mit der Informationen über ein Netzwerk bzw. Teilnetzwerk übertragen werden können. Dieser Begriff ist nicht zu verwechseln mit der Taktfrequenz eines Übertragungstaktes. So können beispielsweise bei einem parallelen Bussystem mit mehreren Leitungen im Gegensatz zu einem seriellen Bussystem mit nur einer Leitung bei gleichem Takt höhere Übertragungsraten erzielt werden, da mehrere Informationen gleichzeitig übertragen werden.

Weiterhin ist in einem erfindungsgemäßen Netzwerk wenigstens ein Teilnetzwerk mit wenigstens einem ersten Teilnetzwerk über ein Gateway zur Übertragung von Daten zwischen den Teilnetzwerken verbunden.

Erfindungsgemäß sind die Teilnetzwerke mit unterschiedlichen Übertragungsraten derart konfiguriert, dass darin die Übertragung einzelner Datenrahmen mit einer definierten zeitlichen Relation zwischen den Teilnetzwerken erfolgt. Dadurch ergibt sich ein definiertes Zeitverhalten des gesamten Bussystems. Zur zeitlichen Synchronisation ist eine Signalisierung der Datenrate oder eines hierzu synchronen Signals vorgesehen. So ist hier beispielsweise neben dem Bittakt auch ein Frametakt geeignet.

Die Erfindung lässt sich beispielhaft in Verallgemeinerung der bekannten Framestruktur des optischen Ringbusses MOST darstellen. Bei diesem Bus wird von einem Teilnehmer des Netzwerkes ein permanenter Datenstrom fester Frequenz (z.B. 22,5 Mbps) erzeugt, der von Teilnehmer zu Teilnehmer in einer zumindest logischen Ringstruktur weitergeleitet wird. Auf den Datenstrom wird zyklisch mit fester Framerate (z.B. 44,1 kHz) ein Frame aufmoduliert. In diesem Frame erfolgt der Datentransport. Jeder Frame enthält eine feste Anzahl an Byte (z.B. 64). Jedes Byte im Frame kann (einzeln und dynamisch) einer bestimmten Datentransport-Applikation zugewiesen werden. So kann beispielsweise das fünfte und sechste Byte in jedem Frame reserviert werden, um einen Audio-Monokanal in digitalisierter Form zu transportieren. Oder Byte 9 kann reserviert werden, um Steuerungs-Pakete ähnlich CAN zu transportieren. In jedem Teilnehmer sitzt innerhalb des Netzwerk-Interfaces eine Netzwerk-Protokoll-Engine, die dann beispielsweise auf dem Bytekanal von Byte 9 CRC-Checks, ACK/NAK-Mechanismen oder automatische Botschaften-Wiederholung im Fehlerfall fährt. Allgemein beschrieben, werden verschiedene Busse bzw. Datentransportprotokolle in den seriellen Datenstrom gemultiplext.

Unter Beibehaltung einer festen zeitlichen Relation werden erfindungsgemäß die Frames für die verschiedenen Netzwerk- Cluster unterschiedlicher Geschwindigkeit gebildet. Die zeitliche Relation ist dadurch zwischen diesen Clustern festgelegt. Alle diese Cluster laufen bezüglich eines dedizierten Clock- und Frame-Masters als synchronisierte Clock- und Frame-Slaves. Welcher Teilnehmer den Clock- und Frame-Master realisiert ist unerheblich und kann nach Aspekten der Systemarchitektur entweder fest definiert werden oder es wird ein Arbitrationsmechanismus definiert. In einem Kraftfahrzeug ist es sinnvoll, beispielsweise einem zentralen Gateway diese Rolle zukommen zu lassen. Auch Redundanzen sind möglich.

Ein erfindungsgemäßes Netzwerk ist besonders vorteilhaft in Kraftfahrzeugen einsetzbar, da hier eine besonders große Vielfalt unterschiedlicher Netzwerke bei gleichzeitig höchsten Anforderungen an Sicherheit und Echtzeitfähigkeit miteinander kombiniert werden muss. Ebenso kann ein erfindungsgemäßes Netzwerk aber auch in der Luft- und Raumfahrttechnik oder in stationären Einsatzgebieten, wie in der Automatisierungstechnik und Anlagentechnik, beispielsweise in Werkzeugmaschinen oder Gebäudevernetzung sowie Home-Entertainment eingesetzt werden.

Da alle Vorgänge im System über mehrere Cluster hinweg streng synchron mit dem Clock- und Frame-Master laufen, sind alle davon abhängigen Vorgänge zeitlich absolut deterministisch. Bei MOST ist heute bereits bekannt, dass die Bearbeitung eines Frames in jedem Teilnehmer eine geringe aber exakt deterministische Zeit dauert. Bei MOST sind also bereits heute alle Vorgänge streng synchron und deterministisch. Hier wird jedoch einen wesentlichen Schritt weitergegangen und die Synchronität und der Determinismus im gesamten System über mehrere Cluster unterschiedlicher Geschwindigkeit hinweg erzeugt.

Die Erfindung zeichnet sich dadurch aus, dass verteilte Systeme homogen realisiert werden können, und trotzdem nicht darauf verzichtet werden muss, Cluster mit unterschiedlichen Datenraten, Transportmechanismen und Physical Layer zu realisieren. Die Kosten für Netzwerk-Interfaces können auf diese Weise den Anforderungen entsprechend und damit so gering wie möglich gehalten werden. Der Aufwand für die Umsetzung der Kommunikation in den Gateways schrumpft zu reinem Switching. Die Systeme werden dadurch wesentlich einfacher, überschaubarer und damit beherrschbarer.

Ein weiterer Vorteil ist, dass das ganze System streng synchron und zeitlich deterministisch läuft. Es lassen sich so Steuerungs- und Regelungs-Aufgaben, sowie Echtzeit Audio/ Video Transport selbst über mehrere Cluster hinweg realisieren.

In einer besonders vorteilhaften Ausgestaltung der Erfindung stehen die Übertragungstaktfrequenzen wenigstens eines weiteren Teilnetzwerkes in einem Verhältnis von n:m bezogen auf ein erstes Teilnetzwerk, wobei n und m ganze Zahlen größer als 0 sind. In solchen Fällen, in denen ganzzahlige Verhältnisse zwischen den Datentaktfrequenzen bestehen, ist die Synchronisation durch einfache Frequenzteiler möglich.

In einer weiteren Ausgestaltung der Erfindung ist wenigstens ein Teilnetzwerk, vorzugsweise ein erstes Teilnetzwerk entsprechend der oben angegebenen MOST-Spezifikation ausgebildet.

In einer weiteren Ausgestaltung ist wenigstens noch ein zusätzliches weiteres Teilnetzwerk vorgesehen, welches für eine zeitlich unkorrelierte Übertragung einzelner Datenrahmen ausgebildet ist. Derartige Teilnetzwerke können mit dem erfindungsgemäßen Netzwerk nur unter Wegfall der Echtzeitfähigkeit bzw. mit hohem zusätzlichen Aufwand verbunden werden. Allerdings ist eine solche Verbindung sinnvoll, wenn nur einfache Steuerinformationen ausgetauscht werden sollen, die nicht zeitkritisch sind.

In einer weiteren vorteilhaften Ausgestaltung der Erfindung ist wenigstens ein weiteres Teilnetzwerk vorgesehen, welches die gleiche Übertragungsrate wie ein erstes, mit diesem verbundenes Teilnetzwerk des erfindungsgemäßen Netzwerks aufweist. In diesem Fall kann eine Synchronisation auf besonders einfache Art und Weise hergestellt werden.

Eine andere Ausgestaltung der Erfindung sieht vor, dass wenigstens ein Teilnetzwerk auf einem optischen Bus basiert. Optische Busse zeichnen sich insbesondere durch hohe Robustheit und Unempfindlichkeit gegen elektromagnetische Störungen aus und werden daher verstärkt insbesondere in Kraftfahrzeugen eingesetzt. Eine erfindungsgemäße Vorrichtung arbeitet unabhängig von der physikalischen Ausgestaltung des Busses, so dass auch optische und elektrische Busse als Träger einzelner Teilnetzwerke eingesetzt werden können. Es können damit auch inhomogene Strukturen aus optischen und elektrischen oder wireless Clustern gebildet werden.

Eine weitere Ausgestaltung der Erfindung besteht darin, dass wenigstens ein Teilnetzwerk auf einem Ringbus basiert. Ringbusse ermöglichen eine deterministische und insbesondere echtzeitfähige Übertragung mit relativ geringem Aufwand. Daher sind diese bevorzugt in einem Bussystem, welches zur echtzeitfähigen Übertragung von Signalen eingesetzt wird, vorzusehen. Selbstverständlich können erfindungsgemäß auch andere Bussysteme in Teilnetzwerken eingesetzt werden.

In einer anderen Ausgestaltung der Erfindung werden verschiedene Frameraten gebildet, die jedoch zueinander in einem festen vorgegebenen Verhältnis stehen. So kann beispielsweise in einem Teilnetzwerk die Übertragung von zwei Frames erfolgen, während in einem anderen Teilnetzwerk nur ein Frame übertragen wird.

In einer weiteren Ausgestaltung der Erfindung haben alle Frames in einem System die selbe zeitliche Länge. Je nach gewünschter Geschwindigkeit eines Clusters werden nun in dessen Frame eine bestimmte Anzahl Byte gelegt. Bei einem Multimedia- Cluster beispielsweise 128, bei einem Hochgeschwindigkeits- Backbone 256 und bei einem Lowspeed- Cluster nur 8. Bei einer Framerate von 44,1 kHz ergibt das ca. 45 Mbps für den Multimedia-Cluster, 90Mbps für das Backbone und für das Lowspeed-Cluster 0,7 Mbps. Je nach Geschwindigkeit eines Clusters können unterschiedliche Physical Layer zur Datenübertragung verwendet werden.

Eine andere Ausgestaltung der Erfindung sieht vor, dass innerhalb eines Netzwerks Informationen über den zeitlichen Zusammenhang der Datenrahmen zu anderen Netzwerkknoten bzw. Teilnetzwerken übertragen werden. Durch Weiterleitung dieser Information, welche die Zeitverschiebung zwischen den Datenrahmen innerhalb unterschiedlicher Teilnetzwerken angibt, lässt sich eine noch genauere Synchronisation erreichen. So kann bei der Übertragung der Daten eine relativ einfache und ungenaue Synchronisation zwischen den Teilnetzwerken erfolgen, wobei zur exakten Synchronisation die exakte Zeitverschiebung mit übertragen wird. Die Synchronisation kann einzelne Knoten oder ganze Teilnetzwerke umfassen. Die Informationen über den zeitlichen Zusammenhang können dynamisch in jedem Datenrahmen oder aber auch in größeren Zeitabständen übermittelt werden.

In einer weiteren Ausgestaltung der Erfindung sind alle Teilnetzwerke über einem gemeinsamen Takt miteinander synchronisiert. Selbstverständlich kann dieser Takt auch ein Vielfaches oder einen Bruchteil der Frequenz der Aussendung von Datenrahmen oder Datenbits angeben. Vorzugsweise ist der Takt aber derart ausgebildet, dass bei einer definierten Flanke des Taktsignals die Aussendung der Datenrahmen beginnt.

In einer anderen Ausgestaltung der Erfindung ist wenigstens ein Gateway zwischen den Clustern derart ausgelegt, dass lediglich alle oder einige Bytes des ankommenden Frames des einen Clusters in den ausgehenden Frame des anderen Clusters kopiert werden und umgekehrt. Auf diese Weise werden die Gateways zu reinen Switches. Sie brauchen die hereinkommenden Daten nicht mehr zu analysieren, zu filtern und zu konvertieren. Die hereinkommenden Bytes werden einfach synchron in herausgehende Datenrahmen des anderen Clusters geschoben. Durch die streng deterministisch zu haltende Zeit des Umkopierens (simpler Vorgang mit absolut vorhersehbarem, gleichbleibendem Aufwand) kann der zeitliche Determinismus beim erfindungsgemäßen Verfahren auch über die Gateways (hier Switches) hinweg aufrecht erhalten werden. Zusätzlich kann auch in jedem Gateway eine Applikation realisiert sein, die für sich am Netzwerkverkehr teilnimmt und mit dem Switch das Netzwerk-Interface teilt.

Es können mehrere Bytekanäle, wie sie beispielsweise von MOST bekannt sind, logisch zu einer Einheit verbunden werden und ein Datentransportprotokoll bzw. ein Transportmechanismus aufgesetzt werden. Ein Beispiel: Auf dem Lowspeed- Cluster hat der Frame 4 Byte. Auf diesen wird ein Transportprotokoll gefahren mit adressierter Paketdaten-Übertragung mit CRC, Handshaking, Paketwiederholung im Fehlerfall etc. In einem Gateway werden diese 4 Byte auf den Frame des Backbone-Clusters an die Stellen Byte 8-11 kopiert und "huckepack" weiter transportiert. In einem zweiten Gateway werden diese 4 Byte an die Bytepositionen 0-3 im Frame des Multimedia- Clusters kopiert. Ein Teilnehmer des Multimedia- Clusters kann nun einerseits über die Bytekanäle 0-3 mit seinen Kommunikationspartnern im Lowspeed- Cluster direkt kommunizieren oder auf beispielsweise den Kanälen 16-23 einen privaten Paket-Kanal des Multimedia- Clusters bedienen, während er auf den Bytes 8-15 einen Stereo-Audio-Kanal als Quelle bedient.

Eine andere Ausgestaltung der Erfindung sieht Mittel zur Signalisierung der Art des Kopiervorganges insbesondere durch eine zusätzliche Signalisierungsleitung vor. Grundsätzlich kann die Vorschrift für das Verteilen der Daten in einem beliebigen getrennten Datenkanal übermittelt werden. Dazu sind bekannte Verfahren, wie sie auch schon heute in MOST zum Zwecke der Kanal Zuweisung (Channel allocation) verwendet werden anwendbar. Eine Signalisierung könnte beispielsweise durch eine separate Steuerleitung erfolgen, welche durch einen logischen Pegel einen Zeitpunkt signalisiert, wenn die gerade über das Netzwerk übertragenen Daten in ein bestimmtes benachbartes Teilnetzwerk übertragen werden sollen. Zur Auswahl mehrerer benachbartes Teilnetzwerke können entsprechend mehrere Steuerleitungen beispielsweise auch binär codiert eingesetzt werden.

In einer weiteren vorteilhaften Ausgestaltung der Erfindung kann auch ein Cluster in mehrere Einzelcluster aufgeteilt sein, die an unterschiedlichen Stellen, örtlich voneinander getrennt laufen. Sie werden über ein schnelles Backbone zu einem einzigen Cluster verbunden, indem ihre Kommunikation (Bytes im Frame) über das Frame des Backbones getunnelt wird. Somit lässt sich beispielsweise eine hierarchische Struktur an Netzwerken realisieren. Grundsätzlich lässt sich der Erfindungsgedanke auf jede beliebige Netzwerktopologie anwenden.

Eine andere Ausgestaltung der Erfindung sieht vor, dass wenigstens ein Teilnetzwerk eine Netzwerk- Adressierung umfassend wenigstens eine Teilnetzwerk- interne Adresse bzw. Teiladresse sowie wenigstens eine globale Adresse bzw. Teiladresse aufweist. Somit ist eine globale Adressierung innerhalb des globalen Netzwerkverbundes möglich.

In einer anderen vorteilhaften Ausgestaltung der Erfindung sind Netzwerkknoten vorgesehen, welche Mittel zur Synchronisation der Aussendung einzelner Datenrahmen bzw. Gruppen von Datenrahmen aufweisen. Die Synchronisation kann hier durch Datenrahmen anderer Netzwerke oder einen gemeinsamen Synchronisationstakt erfolgen.

Erfindungsgemäß ist wenigstens ein Netzwerkknoten eines Teilnetzwerks in einem Netzwerk von Teilnetzwerken mit unterschiedlichen Übertragungsraten derart ausgestaltet, dass er Mittel zur Synchronisation der Aussendung von Datenrahmen mit anderen Netzwerksknoten von Teilnetzwerken mit anderen Übertragungsraten bzw. einem Synchronisationstakt, welcher mehrere Teilnetzwerke mit unterschiedlichen Übertragungsraten synchronisiert, aufweist.

Ein Gateway eines erfindungsgemäßes Netzwerks umfasst wenigstens zwei Netzwerkknoten, welche mit unterschiedlichen Teilnetzwerken verbunden sind. Vorteilhafterweise erfolgt innerhalb des Gateways die Übertragung zwischen den Knoten derart, dass die Datenrahmen in einer definierten zeitlichen Relation zueinander stehen. Besonders vorteilhaft ist eine synchrone Übertragung. Ein solches Gateway wird vorteilhafterweise auf einer Leiterplatte, bevorzugt aber innerhalb eines einzelnen Chips realisiert. Zum Switching kann nun wahlweise einzelnen Netzwerkknoten ein Switch zugeordnet sein, welcher die Daten in den einzelnen Datenrahmen umkopiert. Es kann aber ebenso ein zentraler Switch zur Verknüpfung mehrerer Netzwerkknoten vorgesehen sein.

Vorteilhafterweise wird durch das Gateway die Taktrate und/oder die Framerate eines zweiten Teilnetzwerkes auf die Taktrate und/oder die Framerate eines ersten Teilnetzwerkes synchronisiert.

Ein erfindungsgemäßes Verfahren zum Betrieb eines Netzwerks umfassend mehrere Teilnetzwerke mit unterschiedlichen Übertragungsraten umfasst die folgenden Schritte: Verbinden von Teilnetzwerken zu einem Netzwerk und Übertragen von Datenrahmen in den einzelnen Teilnetzwerken in einem definierten zeitlichen Zusammenhang und vorzugsweise synchronisieren der Datenraten und/oder Frameraten der einzelnen Teilnetzwerke. **Beschreibung der Zeichnungen**

Die Erfindung wird nachstehend ohne Beschränkung des allgemeinen Erfindungsgedankens anhand von Ausführungsbeispielen unter Bezugnahme auf die Zeichnungen exemplarisch beschrieben.
Fig. 1 zeigt in allgemeiner Form schematisch eine erfindungsgemäße Vorrichtung.
Fig. 2 zeigt schematisch den zeitlichen Verlauf von Datenrahmen in unterschiedlichen Teilnetzwerken
Fig. 3 zeigt die Umsetzung von Daten beim Transfer zwischen Teilnetzwerken.
Fig. 4 zeigt einen asynchronen Transfer zwischen Teilnetzwerken.

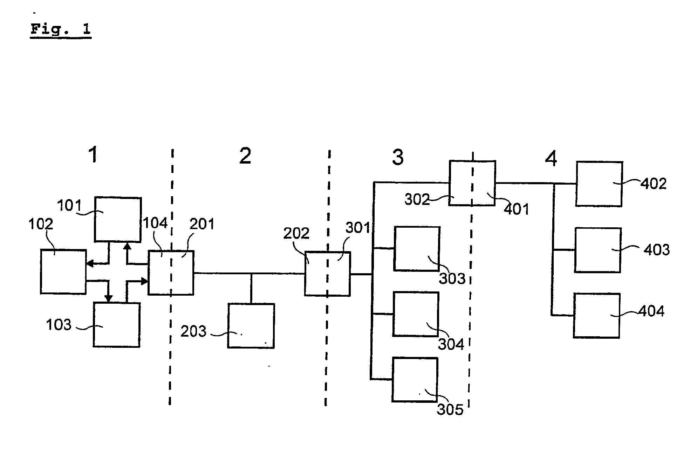

Fig. 1 zeigt in schematischer Form ein typisches Netzwerk, welches aus mehreren Teilnetzwerken besteht. Ein erstes Teilnetzwerk 1 umfasst die Netzwerkknoten 101, 102, 103, 104. Es ist beispielhaft als Ringbus ausgelegt. Jeder Netzwerkknoten ist mit zwei benachbarten Knoten verbunden. Die Übertragungsrichtung der Signale ist durch die Pfeile angegeben. Ein zweites Teilnetzwerk 2 umfasst die Netzwerkknoten 201, 202, 203. Hier sind alle Netzwerkknoten über ein gemeinsames Busleitungssystem miteinander verbunden. Ein drittes Teilnetzwerk 3 umfasst die Netzwerkknoten 301, 302, 303, 304, 305. Schließlich ist noch ein viertes Teilnetzwerk 4 mit den Netzwerkknoten 401, 402, 403, 404 vorgesehen. Auch dieses Teilnetzwerk weist wie die beiden zuvor beschriebenen Teilnetzwerke eine lineare Struktur auf. Zur Verbindung der Teilnetzwerke sind Gateways vorgesehen. Ein erstes Gateway umfasst die Netzwerkknoten 104, 201. Ein zweites Gateway umfasst die Netzwerkknoten 202, 301. Ein drittes Gateway umfasst schließlich die Netzwerkknoten 302, 401. Diese Teilnetzwerke sind meist an ihre Aufgabenstellungen angepasst und weisen daher grundlegend unterschiedliche physikalische und logische Eigenschaften auf. So kann beispielsweise das Teilnetzwerk 1 auf einem optischen Ringbus, wie dem MOST-Bus basieren. Das Teilnetzwerk 2 kann ein auf einer Leiterplatte oder einem Chip angeordnetes lokales, paralleles Bussystem sein. Schließlich können die beiden Teilnetzwerke 3 und 4 beispielhaft als langsamer serieller Bus wie z.B. CAN realisiert sein. Erfindungsgemäß werden die Datenrahmen nun in einer vorgegebenen, definierten zeitlichen Relation zueinander übertragen.

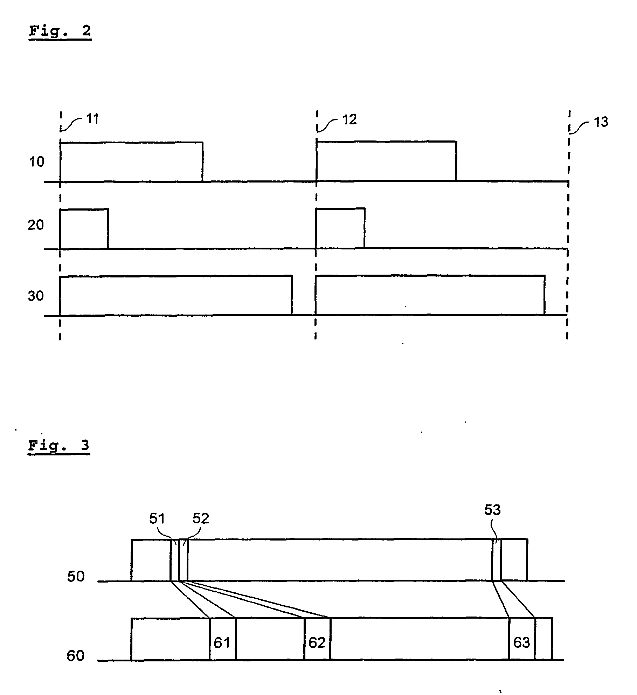

Fig. 2 zeigt schematisch den zeitlichen Verlauf unterschiedlicher Datenrahmen. Die erste Kurve 10 zeigt beispielhaft die Übertragung von Datenrahmen in dem ersten Teilnetzwerk. Die Kurve 20 zeigt die Datenrahmen des zweiten Teilnetzwerkes, die Kurve 30 zeigt schließlich die Datenrahmen des dritten und vierten Teilnetzwerks. Die Datenrahmen können unterschiedlich lang sein, sie können innerhalb des Zeitrasters nur kurzzeitig andauern, oder das Zeitraster ganz auffüllen, was einem kontinuierlichen Datenstrom entspricht. Die Rahmen beginnen im vorliegenden Beispiel aber jeweils gleichzeitig zu den diskreten Zeitpunkten 11, 12, 13.

So zeigt die Kurve 20 die kürzesten Datenrahmen, da das Teilnetzwerk 2 die höchste Übertragungsgeschwindigkeit aufweist. Ebenso können selbstverständlich die Datenrahmen auch mit einem genau definierten zeitlichen Versatz übertragen werden. Ein solcher Versatz ergibt sich regelmäßig in der technischen Realisierung, da Laufzeiten der elektronischen Komponenten immer endlich sind. Erfindungswesentlich ist, dass dieser Versatz entweder vernachlässigbar klein oder zumindest definiert und vorzugsweise konstant ist. Schwankt dieser Versatz stark, so kann er auch dynamisch vermessen werden. Er kann nun entsprechend ausgeglichen bzw. ein entsprechender Wert mit den jeweiligen Datenrahmen signalisiert werden. In den Lücken zwischen synchronen Daten können auch weitere, nicht synchrone Daten, wie normale Paketdaten übertragen werden.

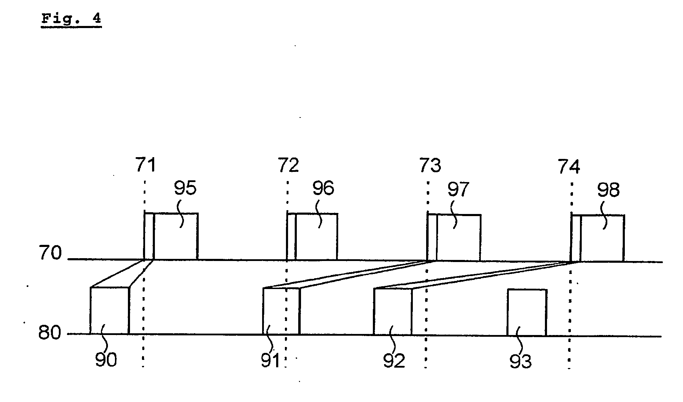

In Fig. 3 ist die Umsetzung von Daten zwischen Teilnetzwerken durch ein Gateway, wie es beispielsweise die Netzwerkknoten 202 und 301 umfassend zur Verbindung der Teilnetzwerke 2 und 3 vorgesehen ist, dargestellt. Ein erster Datenrahmen eines ersten Datenstroms 50 mit relativ hoher Datenrate, beispielsweise aus dem Teilnetzwerk 2, weist beispielhaft drei Datenworte 51, 52, 53 auf, welche in einen zweiten Datenstrom 60 mit geringerer Datenrate, beispielsweise aus dem Teilnetzwerk 3 übernommen werden. Das Gateway fügt die Daten hier an den Positionen 61, 62, 63 ein. Durch den fest vorgegebenen zeitlichen Zusammenhang zwischen den Datenrahmen und die fest vorgegebenen Positionen muss das Gateway nicht den Datenstrom analysieren, sondern kann einfach eine Umsetzung innerhalb fest vorgegebener Positionen vornehmen. Somit können auf einfache Weise die Daten, welche in einem langsamen Netzwerk übertragen werden sollen, aus einem schnellen Datenstrom und umgekehrt selektiert werden. Aufgrund des Determinismus in einem synchronen System können die Daten eines Datenrahmens aus dem ersten Datenstrom 50 bereits in einen Datenrahmen des Datenstroms 60 integriert werden, während dieser ausgesendet wird. Dies ist bei nicht-deterministischen und nicht-synchronen Bussystemen nicht möglich, da zum Zeitpunkt der Aussendung noch nicht bekannt ist, welche Daten aus dem Datenstrom 50 empfangen werden.

In Fig. 4 ist ein asynchroner Transfer zwischen Teilnetzwerken dargestellt. Die nichtsynchronen Daten des Datenstromes 80 werden über ein Gateway frühestens mit dem nächsten ausgehenden Datenrahmen (Frame) im Datenstrom 70 ausgesendet, da zur Aussendung eines Datenrahmens dessen Inhalt bereits bekannt sein muss und dieser daher bereits vor der Aussendung empfangen sein muss. Diese Problematik tritt bei erfindungsgemäß miteinander synchronisierten Bussystemen, wie z.B. in Fig. 3 dargestellt, nicht auf.
So werden einzelne Frames 90, 91, 92, 93 des ersten Datenstromes 80 in größere Frames 95, 96, 97, 98 eines zweiten Datenstromes 70 mit höherer Datenrate umgesetzt. Dabei werden noch zusätzliche Informationen hinzugefügt. Da Frame 90 rechtzeitig vor Sendebeginn des Frames 95, nämlich zum Zeitpunkt 71 empfangen wurde, kann der Inhalt disese Frames 90 auch korrekt mittels Frame 95 weitergegeben werden. Frame 91 konnte nicht mehr vor Beginn der Aussendung von Frame 96, zum Zeitpunkt 72 empfangen werden, daher können die Informationen des Frame 91 nicht mit Frame 96 weiterübertragen werden. Dieser ist somit kürzer oder wird mit Füllzeichen aufgefüllt. Die Informationen von Frame 91 können frühestens mit Frame 97 beginnend zum Zeitpunkt 73 weitergeleitet werden. Dadurch können die Informationen der folgenden Frames 92, 93 erst mit den späteren Frames 98 (Zeitpunkt 74) etc. weitergeleitet werden. Obwohl die mittlere Framerate des ersten Datenstromes 80 der mittleren Framerate des Datenstromes 80 entspricht, wurde nun aufgrund eines kurzfristigen Zeitversatzes ein Datenblock
Übersprungen, der nicht mehr aufgeholt werden kann bzw zu nicht-deterministischen Verzögerungen in der Übertragung führt.

## Patentansprüche

1. Netzwerk zur Datenübertragung umfassend mehrere Teilnetzwerke (1, 2, 3, 4) zur Übertragung von Daten in Datenrahmen, wobei jedes Teilnetzwerk wenigstens zwei Teilnehmer (101, 102, 103, 104) umfasst , und jedes Teilnetzwerk (1, 2, 3, 4) mit wenigstens einem anderen Teilnetzwerk (1, 2, 3, 4) über wenigstens ein Gateway (104, 201) zur Übertragung von Daten zwischen den Teilnetzwerken verbunden ist, wobei wenigstens ein erstes Teilnetzwerk zur gleichzeitigen Adressierung von Datenrahmen an mehrere Teilnehmer und/oder zur wahlfreien Adressierung einzelner Datenrahmen oder Teilen von Datenrahmen konfiguriert ist und dieses Teilnetzwerk weiterhin zur synchronen Übertragung von Synchrondaten und/oder Kontrolldaten und normalen Paketdaten ausgelegt ist,
**dadurch gekennzeichnet, dass**
wenigstens zwei Teilnetzwerke (1, 2, 3, 4) für unterschiedliche Übertragungsraten konfiguriert sind und die Übertragung einzelner Datenrahmen innerhalb der jeweiligen Teilnetzwerke mit einer definierten zeitlichen Relation zwischen den Teilnetzwerken erfolgt.

2. Netzwerk nach Anspruch 1
**dadurch gekennzeichnet, dass**
die Datenrahmen in wenigstens zwei Teilnetzwerken unterschiedlich gestaltet sind, sowie wenigstens ein Gateway (104, 201) zur Verbindung mehrerer Teilnetzwerke derart ausgebildet ist, dass es einzelne Bits oder Datenworte an vorgegebenen Positionen der Datenrahmen eines Teilnetzwerks an vorgegebenen Positionen der Datenrahmen eines anderen Teilnetzwerks kopiert.

3. Netzwerk nach Anspruch 1 oder 2,
**dadurch gekennzeichnet, dass**
die Übertragungstaktfrequenzen wenigstens eines weiteren Teilnetzwerkes in einem Verhältnis von n:m bezogen auf ein erstes Teilnetzwerk stehen, wobei n und m ganze Zahlen sind.

4. Netzwerk nach einem der vorhergehenden Ansprüche,
**dadurch gekennzeichnet, dass**
wenigstens ein Teilnetzwerk entsprechend der MOST-Spezifikation ausgebildet ist.

5. Netzwerk nach einem der vorhergehenden Ansprüche,
**dadurch gekennzeichnet, dass**
zusätzlich wenigstens ein weiteres Teilnetzwerk vorgesehen ist, welches derart konfiguriert ist, dass darin die Übertragung einzelner Datenrahmen zeitlich unkorreliert zu anderen Teilnetzwerken erfolgt.

6. Netzwerk nach einem der vorhergehenden Ansprüche,
**dadurch gekennzeichnet, dass**
zusätzlich wenigstens ein weiteres Teilnetzwerk vorgesehen ist, welches eine mit dem ersten Teilnetzwerk gleiche Übertragungsrate aufweist.

7. Netzwerk nach einem der vorhergehenden Ansprüche,
**dadurch gekennzeichnet, dass**
wenigstens ein Teilnetzwerk auf einem optischen Bus basiert.

8. Netzwerk nach einem der vorhergehenden Ansprüche,
**dadurch gekennzeichnet, dass**
wenigstens ein Teilnetzwerk auf einem Ringbus basiert.

9. Netzwerk nach einem der vorhergehenden Ansprüche,
**dadurch gekennzeichnet, dass**
die Anzahl der Datenrahmen, welche' innerhalb eines bestimmten Zeitintervalls in unterschiedlichen Teilnetzwerken übertragen werden, in einem definierten, vorgegebenen Verhältnis zueinander stehen.

10. Netzwerk nach einem der vorhergehenden Ansprüche,
**dadurch gekennzeichnet, dass**
die Datenrahmen, welche innerhalb der unterschiedlichen Teilnetzwerke übertragen werden, die gleiche zeitliche Dauer aufweisen.

11. Netzwerk nach einem der vorhergehenden Ansprüche,
**dadurch gekennzeichnet, dass**
wenigstens innerhalb eines Teilnetzwerks Informationen über den zeitlichen Zusammenhang zu anderen Teilnetzwerken übertragen werden.

12. Netzwerk nach einem der vorhergehenden Ansprüche,
**dadurch gekennzeichnet, dass**
mehrere Teilnetzwerke über einen gemeinsamen Takt miteinander synchronisiert sind.

13. Netzwerk nach einem der vorhergehenden Ansprüche,
**dadurch gekennzeichnet, dass**
in den Lücken zwischen synchronen Daten auch weitere, nicht synchrone Daten, wie normale Paketdaten übertragen werden.

14. Netzwerk nach Anspruch 2,
**dadurch gekennzeichnet, dass**
Mittel zur Signalisierung der Art des Kopiervorganges insbesondere durch eine zusätzliche Signalisierungsleitung vorgesehen sind.

15. Netzwerk nach einem der vorhergehenden Ansprüche,
**dadurch gekennzeichnet, dass**
wenigstens ein Teilnetzwerk selbst in weitere Teilnetzwerke aufgeteilt ist, welche wiederum vorzugsweise über ein schnelles Backbone zu einem einzigen Teilnetzwerk verbunden sind.

16. Netzwerk nach einem der vorhergehenden Ansprüche,
**dadurch gekennzeichnet, dass**
wenigstens ein Teilnetzwerk eine Netzwerk- Adressierung umfassend wenigstens eine Teilnetzwerkinterne Adresse bzw. Teiladresse sowie wenigstens eine globale Adresse bzw. Teiladresse aufweist.

17. Netzwerk nach einem der vorhergehenden Ansprüche,
**dadurch gekennzeichnet, dass**
wenigstens ein Netzwerkknoten vorgesehen ist, welcher Mittel zur Synchronisation der Aussendung einzelner Datenrahmen bzw. Gruppen von Datenrahmen mit anderen Teilnetzwerken mit unterschiedlichen Übertragungsraten bzw. einem Synchronisationstakt, welcher mehrere Teilnetzwerke synchronisiert aufweist.

18. Netzwerkknoten für ein Netzwerk nach dem Anspruch 1
**dadurch gekennzeichnet, dass**
Mittel zur Synchronisation der Aussendung von Datenrahmen mit anderen Netzwerkknoten bzw. einem Synchronisationstakt vorgesehen sind.

19. Gateway (104, 201) für ein Netzwerk zur Datenübertragung umfassend mehrere Teilnetzwerke (1, 2, 3, 4) zur Übertragung von Daten in Datenrahmen, wobei jedes Teilnetzwerk wenigstens zwei Teilnehmer (101, 102, 103, 104) umfasst, und wenigstens ein erstes Teilnetzwerk zur gleichzeitigen Adressierung von Datenrahmen an mehrere Teilnehmer und/oder zur wahlfreien Adressierung einzelner Datenrahmen oder Teilen von Datenrahmen konfiguriert ist und dieses Teilnetzwerk weiterhin zur synchronen Übertragung von Synchrondaten und/oder Kontrolldaten und normalen Paketdaten ausgelegt ist, und das Gateway jedes Teilnetzwerk (1, 2, 3, 4) mit wenigstens einem anderen Teilnetzwerk (1, 2, 3, 4) verbindet,
**dadurch gekennzeichnet, dass**
das Gateway ausgebildet ist zur Kommunikation mit wenigstens zwei Teilnetzwerken (1, 2, 3, 4), die für unterschiedliche Übertragungsraten konfiguriert sind wobei die Übertragung einzelner Datenrahmen innerhalb der jeweiligen Teilnetzwerke mit einer definierten zeitlichen Relation zwischen den Teilnetzwerken erfolgt.

20. Gateway nach Anspruch 19,
**dadurch gekennzeichnet, dass**
das Gateway die Taktrate und/oder die Framerate eines zweiten Teilnetzwerkes auf die Taktrate und/oder die Framerate eines ersten Teilnetzwerkes synchronisiert.

21. Verfahren zum Betrieb eines Netzwerks zur Datenübertragung umfassend mehrere Teilnetzwerke (1, 2, 3, 4) zur Übertragung von Daten in Datenrahmen, wobei jedes Teilnetzwerk wenigstens zwei Teilnehmer (101, 102, 103, 104) umfasst , und jedes Teilnetzwerk (1, 2, 3, 4) mit wenigstens einem anderen Teilnetzwerk (1, 2, 3, 4) über wenigstens ein Gateway (104, 201) zur Übertragung von Daten zwischen den Teilnetzwerken verbunden ist, wobei wenigstens ein erstes Teilnetzwerk zur gleichzeitigen Adressierung von Datenrahmen an mehrere Teilnehmer und/oder zur wahlfreien Adressierung einzelner Datenrahmen oder Teilen von Datenrahmen konfiguriert ist und dieses Teilnetzwerk weiterhin zur synchronen Übertragung von Synchrondaten und/oder Kontrolldaten und normalen Paketdaten ausgelegt ist,
**gekennzeichnet durch**
Übertragen von Datenrahmen in den einzelnen Teilnetzwerken mit unterschiedliche Übertragungsraten in einem definierten zeitlichen Zusammenhang, vorzugsweise **durch** Synchronisation der Frameraten der einzelnen Teilnetzwerke.

## Claims

1. A network for data transmission, comprising several subnetworks (1, 2, 3, 4) for transmitting data in data frames, wherein each subnetwork comprises at least two subscribers (101, 102, 103, 104) and each subnetwork (1, 2, 3, 4) is connected with at least one other subnetwork (1, 2, 3, 4) via at least one gateway (104, 201) for transmitting data between the subnetworks, and wherein at least one first subnetwork is configured for simultaneously addressing data frames to several subscribers and/or for arbitrary addressing of single data frames or parts of data frames, and said first subnetwork is further configured for synchronous transmission of synchronous data and/or check data and normal packet data, **characterized in that** at least two subnetworks (1, 2, 3, 4) are configured for different transmission rates and the transmission of single data frames within the respective subnetworks occurs with a defined temporal relationship between the subnetworks.

2. A network according to claim 1, **characterized in that** the data frames in at least two subnetworks are arranged differently and that at least one gateway (104, 201) is arranged for connecting several subnetworks such that it copies individual bits or data words at predetermined positions of the data frames of a subnetwork to predetermined positions of the data frames of another subnetwork.

3. A network according to claim 1 or 2, **characterized in that** transmission clock frequencies of at least one further subnetwork stand at a ratio of n:m relating to a first subnetwork, with n and m being integers.

4. A network according to one of the preceding claims, **characterized in that** at least one subnetwork is arranged according to the MOST specification.

5. A network according to one of the preceding claims, **characterized in that** in addition at least one further subnetwork is provided which is configured in such a way that the transmission of single data frames occurs therein in without a temporal correlation with respect to other subnetworks.

6. A network according to one of the preceding claims, **characterized in that** at least one further subnetwork is provided in addition, having a transmission rate which is identical to that of the first subnetwork.

7. A network according to one of the preceding claims, **characterized in that** at least one subnetwork is based on an optical bus.

8. A network according to one of the preceding claims, **characterized in that** at least one subnetwork is based on a ring bus.

9. A network according to one of the preceding claims, **characterized in that** the number of the data frames which are transmitted within a specific time interval in different subnetworks are in a defined, predetermined relationship with respect to each other.

10. _{A} network according to one of the preceding claims,
**characterized in that** the data frames which are transmitted within the different subnetworks have the same time duration.

11. A network according to one of the preceding claims,
**characterized in that** information on the temporal correlation to other subnetworks is transmitted at least within one subnetwork.

12. A network according to one of the preceding claims,
**characterized in that** some subnetworks are synchronized with each other via a common clock pulse.

13. A network according to one of the preceding claims,
**characterized in that** further, non-synchronous data such as normal packet data is also transmitted in the gaps between synchronous data.

14. A network according to claim 2, **characterized in that** means for signalling the type of the copying process are provided especially by an additional signalling line.

15. A network according to one of the preceding claims,
**characterized in that** at least one subnetwork is divided itself into further subnetworks, which on their part are connected via a backbone, preferably via a quick backbone, into a single subnetwork.

16. A network according to one of the preceding claims,
**characterized in that** at least one subnetwork has a network addressing comprising at least one subnetwork-internal address or partial address and at least one global address or partial address.

17. A network according to one of the preceding claims,
**characterized by** at least one network node which synchronises multiple subnetworks, comprising means for the synchronization of transmitting single data frames and/or groups of data frames with other subnetworks with different transmission rates and/or a different synchronization clock.

18. A network node for a network according to claim 1,
**characterized in that** means are provided for synchronizing of the transmission of data frames with other network nodes and/or a synchronization clock.

19. A gateway (104, 201) for a network for data transmission, comprising several subnetworks (1, 2, 3, 4) for transmitting data in data frames, with each subnetwork comprising at least two subscribers (101, 102, 103, 104), and at least one first subnetwork is configured for the simultaneous addressing of data frames to several subscribers and/or for arbitrary addressing of single data frames or parts of data frames, and said subnetwork is further configured for the synchronous transmission of synchronous data and/or check data and normal packet data, and the gateway connects each subnetwork (1, 2, 3, 4) with at least one other subnetwork (1, 2, 3, 4), **characterized**
**in that** the gateway is arranged for communication with at least two subnetworks (1, 2, 3, 4) which are configured for different transmission rates, with the transmission of single data frames within the respective subnetworks occuring with a defined temporal relationship between the subnetworks.

20. A gateway according to claim 19, **characterized in that** the gateway synchronizes the clock speed and/or frame rate of a second subnetwork to the clock speed and/or frame rate of a first subnetwork.

21. A method for operating a network for data transmission, comprising several subnetworks (1, 2, 3, 4) for transmitting data in data frames, with each subnetwork comprising at least two subscribers (101, 102, 103, 104) and each subnetwork (1, 2, 3, 4) being connected with at least one other subnetwork (1, 2, 3, 4) via at least one gateway (104, 201) for transmitting data between the subnetworks, with at least one first subnetwork being configured for simultaneously addressing data frames to several subscribers and/or for optional addressing of individual data frames or parts of data frames, and said subnetwork is further configured for synchronous transmission of synchronous data and/or check data and normal packet data, **characterized by** transmission of data frames in the individual subnetworks with different transmission rates in a defined temporal correlation, preferably by synchronization of the frame rates of the individual subnetworks.

## Revendications

1. Réseau de transmission de données comprenant plusieurs réseaux partiels (1, 2, 3, 4) pour transmettre des données dans une trame de données, chaque réseau partiel comprenant au moins deux correspondants ou participants (101, 102, 103, 104), et chaque réseau partiel (1, 2, 3, 4) étant relié à au moins un autre réseau partiel (1, 2, 3, 4) par au moins une passerelle (104, 201) pour transmettre des données entre les réseaux partiels, au moins un premier réseau partiel étant configuré en vue de l'adressage simultané de trames de données à plusieurs correspondants ou participants et/ou en vue de l'adressage facultatif de différentes trames de données ou de parties de trames de données, et ce réseau partiel étant conçu en outre pour la transmission synchrone des données synchrones et/ou des données de contrôle et des données de paquets normales,
**caractérisé en ce**
**qu'**au moins deux réseaux partiels (1, 2, 3, 4) sont configurés pour des vitesses de transmission différentes, et en ce que la transmission de trames de données individuelles à l'intérieur des réseaux partiels respectifs a lieu avec une relation temporelle définie entre les réseaux partiels.

2. Réseau selon la revendication 1,
**caractérisé en ce**
**que** les trames de données dans au moins deux réseaux partiels sont conçues différemment, ainsi qu'au moins une passerelle (104, 201) est configurée pour la connexion de plusieurs réseaux partiels, de telle sorte qu'elle copie différents bits ou données élémentaires dans des positions définies des trames de données d'un réseau partiel dans des positions spécifiées des trames de données d'un autre réseau partiel.

3. Réseau selon la revendication 1 ou 2,
**caractérisé en ce**
**que** les fréquences d'horloge de transmission d'au moins un autre réseau partiel se situent dans un rapport de n:m par rapport à un premier réseau partiel, n et m étant des nombres entiers.

4. Réseau selon l'une quelconque des revendications précédentes,
**caractérisé en ce**
**qu'**au moins un réseau partiel est configuré en fonction de la spécification MOST.

5. Réseau selon l'une quelconque des revendications précédentes,
**caractérisé en ce**
**qu'**en sus au moins un autre réseau partiel est prévu, lequel est configuré de telle sorte que la transmission des différentes trames de données a lieu sans corrélation temporelle avec les autres réseaux partiels.

6. Réseau selon l'une quelconque des revendications précédentes,
**caractérisé en ce**
**qu'**en sus au moins un autre réseau partiel est prévu, lequel comprend une vitesse de transmission identique à celle du premier réseau partiel.

7. Réseau selon l'une quelconque des revendications précédentes,
**caractérisé en ce**
**qu'**au moins un réseau partiel se base sur un bus optique.

8. Réseau selon l'une quelconque des revendications précédentes,
**caractérisé en ce**
**qu'**au moins un réseau partiel se base sur un bus en anneau.

9. Réseau selon l'une quelconque des revendications précédentes,
**caractérisé en ce**
**que** le nombre des trames de données, qui sont transmises à l'intérieur d'un intervalle de temps défini dans différents réseaux partiels, se situe dans un rapport défini et spécifié entre les trames.

10. Réseau selon l'une quelconque des revendications précédentes,
**caractérisé en ce**
**que** les trames de données, qui sont transmises à l'intérieur des différents réseaux partiels, présentent la même durée temporelle.

11. Réseau selon l'une quelconque des revendications précédentes,
**caractérisé en ce**
**que** des informations contenues au moins à l'intérieur d'un réseau partiel sont transmises par la relation temporelle avec les autres réseaux partiels.

12. Réseau selon l'une quelconque des revendications précédentes,
**caractérisé en ce**
**que** plusieurs réseaux partiels sont synchronisés les uns aux autres par une horloge commune.

13. Réseau selon l'une quelconque des revendications précédentes,
**caractérisé en ce**
**que** dans les espaces entre les données synchrones sont également transmises d'autres données non synchrones, telles que des données de paquets normales.

14. Réseau selon la revendication 2,
**caractérisé en ce**
**que** des moyens de signalisation du type de procédé de copie sont prévus en particulier par une ligne de signalisation supplémentaire.

15. Réseau selon l'une quelconque des revendications précédentes,
**caractérisé en ce**
**qu'**au moins un réseau partiel est divisé lui-même en d'autres réseaux partiels, qui sont reliés de préférence par un réseau fédérateur rapide en un unique réseau partiel

16. Réseau selon l'une quelconque des revendications précédentes,
**caractérisé en ce**
**qu'**au moins un réseau partiel présente un adressage réseau comprenant au moins une adresse interne de réseau partiel et/ou des adresses partielles, ainsi qu'au moins une adresse globale et/ou des adresses partielles.

17. Réseau selon l'une quelconque des revendications précédentes,
**caractérisé en ce**
**qu'**au moins un noeud de réseau est prévu, lequel comprend des moyens de synchronisation de l'émission des différentes trames de données et/ou des groupes de trames de données avec d'autres réseaux partiels présentant différentes vitesses de transmission et/ou une horloge de synchronisation qui présente de manière synchronisée plusieurs réseaux partiels.

18. Noeud de réseau pour un réseau selon la revendication 1,
**caractérisé en ce**
**que** des moyens de synchronisation de l'émission des trames de données sont prévus avec d'autres noeuds de réseau et/ou une horloge de synchronisation.

19. Passerelle (104, 201) pour un réseau de transmission de données comprenant plusieurs réseaux partiels (1, 2, 3, 4) pour la transmission de données dans des trames de données, chaque réseau partiel comprenant au moins deux correspondants ou participants(101, 102, 103, 104), et au moins un premier réseau partiel étant configuré pour l'adressage simultané des trames de données à plusieurs correspondants ou participants, et/ou pour l'adressage facultatif des différentes trames de données ou des parties de trames de données, et ce réseau partiel étant conçu en outre pour la transmission synchrone des données synchrones et/ou des données de contrôle et des données de paquet normales, et la passerelle relie chaque réseau partiel (1, 2, 3, 4) à au moins un autre réseau partiel (1, 2, 3, 4),
**caractérisé en ce**
**que** la passerelle est configurée pour la communication avec au moins deux réseaux partiels (1, 2, 3, 4) qui sont configurés pour différentes vitesses de transmission, la transmission des différentes trames de données au sein des réseaux partiels respectifs ayant lieu avec une relation temporelle définie entre les réseaux partiels.

20. Passerelle selon la revendication 19,
**caractérisée en ce**
**que** la passerelle synchronise la fréquence d'horloge et/ou le taux de trame d'un second réseau partiel sur la fréquence d'horloge et/ou le taux de trame d'un premier réseau partiel.

21. Procédé de fonctionnement d'un réseau pour la transmission de données comprenant plusieurs réseaux partiels (1, 2, 3, 4) pour transmettre des données dans une trame de données, chaque réseau partiel comprenant au moins deux correspondants ou participants (101, 102, 103, 104), et chaque réseau partiel (1, 2, 3, 4) étant relié à au moins un autre réseau partiel (1, 2, 3, 4) par au moins une passerelle (104, 201) pour la transmission de données entre les réseaux partiels, au moins un premier réseau partiel étant configuré pour l'adressage simultané de trames de données à plusieurs correspondants ou participants, et/ou pour l'adressage facultatif ou sélectif de différentes trames de données ou de parties de trames de données, et ce réseau partiel étant conçu en outre pour la transmission synchrone de données synchrones et/ou de données de contrôle et des données de paquets normales,
**caractérisé par**
la transmission de trames de données dans les différents réseaux partiels avec différentes vitesses de transmission dans une relation temporelle définie, de préférence par synchronisation des taux de trame des différents réseaux partiels.
